# EUROPÄISCHE PATENTSCHRIFT

(11) **EP 3 607 910 B1**
(45) Veröffentlichungstag und Bekanntmachung des Hinweises auf die Patenterteilung: **28.01.2026**
(21) Anmeldenummer: 19194451.1
(22) Anmeldetag: 23.03.2010
(51) Int. Cl.: A61C 8/00

(54) **SCANKOERPER FUER ZAHNIMPLANTATE**
DENTAL IMPLANT SCANNER
CORPS DE SCANNER POUR IMPLANTS DENTAIRES

(30) Priorität: 23.03.2009 DE 102009014013
(43) Veröffentlichungstag der Anmeldung: 12.02.2020
(62) Teilanmeldung aus: 10709750.3
(73) Patentinhaber: BEGO Implant Systems GmbH & Co. KG, 28359 Bremen (DE)
(72) Erfinder: HUNENBART, Stefan, 69469 Weinheim (DE); MEYER, Stephan, 28844 Weyhe (DE)
(74) Vertreter: Eisenführ Speiser

(56) Entgegenhaltungen:
- EP-A1- 1 618 854
- DE-A1- 102006 052 419
- US-A1- 2002 039 717
- US-A1- 2008 002 869

## Beschreibung

Die Erfindung betrifft einen Erfassungshilfskörper zur geometrischen Erfassung der Implantationslage und Ausrichtung eines Zahnimplantats, umfassend: einen Aufnahmeabschnitt, mittels dem der Erfassungskörper einem Zahnimplantat in geometrisch definierter Weise zugeordnet werden kann, einen mit dem Aufnahmeabschnitt verbundenen Erfassungsabschnitt, welcher ausgebildet ist, um von einer berührungslosen Bilderfassungsvorrichtung erfasst zu werden. Ein weiterer Aspekt der Erfindung ist ein Verfahren zur Erfassung der Lage der Implantatschnittstelle und des Ortes eines Zahnimplantats.

In der modernen Zahnimplantologie besteht eine wesentliche Voraussetzung für den Erfolg eines Zahnimplantates, d.h. insbesondere dessen gute Funktionalität und langfristige Verankerung, darin, dass der zu ersetzende Zahn/Aufbau solcherart platziert und gestaltet, ausgerichtet und ausmodelliert wird, dass er in idealer Weise mit den benachbarten Zähnen und dem Antagonisten zusammenwirken kann und Kräfte auf Implantat und Knochen überträgt. Sowohl bei dem Implantationsvorgang des im Knochen verankerten Implantatteils als auch bei der späteren Rekonstruktion des sichtbaren Anteils des Zahnes ist es zu diesem Zweck erforderlich, die Lage und Ausrichtung des Implantates exakt bestimmen zu können, um einerseits die Implantatlage im Mundraum den tatsächlichen anatomischen Verhältnissen exakt anzupassen und zu kennen als auch andererseits die an dem Modell bestehende Geometrie den tatsächlichen anatomischen Verhältnissen exakt anpassen zu können. Diese Vorgänge werden dadurch erschwert, dass das Zahnimplantat selbst praktisch vollständig im Kieferknochen versenkt ist und sich daher einer direkten Erfassung hinsichtlich Lage und Ausrichtung faktisch entzieht und es immer individuelle Lösungen gibt.

Es ist bekannt, sich zur Erfassung der Lage und Ausrichtung eines Implantats eines Erfassungshilfskörpers zu bedienen, der mit dem Implantat verbunden wird, beispielsweise darin eingeschraubt wird, und an diesem Erfassungshilfskörper einen mit einer Abtastvorrichtung erfassbaren Kopfbereich mit tastbaren Kanten oder Ecken als Erfassungsabschnitt bereitzustellen, die als Referenzpunkte dienen. Anhand der bekannten Geometrie des abtastbaren Erfassungsabschnitt und dem mit dem Implantat verbundenen Aufnahmeabschnitt kann dann, wenn weiterhin die Geometrie des Zahnimplantats bekannt ist, dessen Lage und Ausrichtung anhand der zuvor erfassten Daten des Erfassungsabschnitts berechnet werden. Dies erfolgt in der Regel durch Umsetzung der durch Abtastung/berührungslose Bilderfassung erfassten Daten mittels Triangulation in eine Darstellung des Erfassungshilfskörpers und entsprechende Weiterberechnung des solcherart dargestellten Erfassungshilfskörpers in seinem mit dem Implantat verbundenen Zustand.

Nachteilig an dieser Vorgehensweise ist, dass häufig eine nicht ausreichende Genauigkeit bei der Bestimmung der Lage und Ausrichtung des Erfassungshilfskörpers erreicht wird und sich Genauigkeitsfehler dieser Art in verstärktem Ausmaß auf die Genauigkeit der Bestimmung der Lage und Ausrichtung des Implantats auswirken. Die Erfassung und Berechnung der Lage und Ausrichtung eines Erfassungshilfskörpers und Implantats nach dem Stand der Technik weist daher Ungenauigkeiten auf, die zu einer unzulänglichen Präzision bei der Platzierung/Dimensionierung und Anfertigung des Zahnersatzes führen können, was die Funktionalität und Langzeitverankerung des Zahnimplantats und des Zahnersatzes beeinträchtigen kann.

Aus US 2008/0002869 A1 ist ein Verfahren und System zur Bestimmung der relativen Lage und Orientierung von Objekten in einer Mehrzahl von aufgenommenen Bildern bekannt. Aus DE 10 2006 052 419 A1 ist ein Verfahren zum Erfassen von Implantaten in einem Kiefer oder einer Implantatabformung bekannt. Die Erfindung betrifft auch einen Messkörper zum Einsetzen in ein Implantat und/oder eine Abformung davon in Kombination mit einem Datensatz. Aus US 2002/0039717 A1 ist eine Heilkappe zur Anbringung an ein Dentalimplantat bekannt.

Der Erfindung liegt das Ziel zugrunde, die Genauigkeit der Bestimmung der Lage und der Ausrichtung eines Zahnimplantates zu verbessern.

Diese Aufgabe wird erfindungsgemäß durch einen Erfassungshilfskörper gemäß Anspruch 1 sowie einem Verfahren gemäß Anspruch 8 gelöst. Bevorzugte Ausführungsformen sind in den abhängigen Ansprüchen definiert.

Erfindungsgemäß wird eine erste plane Erfassungsfläche und eine weitere, gekrümmte Erfassungsfläche am Erfassungsabschnitt des Erfassungshilfskörpers bereitgestellt und diese beiden Erfassungsflächen dienen dazu, die Implantationsausrichtung und -lage eines Zahnimplantats exakt zu bestimmen. Erfindungsgemäß wird folglich davon abgesehen, Kanten, Ecken oder sonstige markante Punkte eines Erfassungshilfskörpers abzutasten und stattdessen auf zwei in bestimmter Lage zueinander ausgerichtete Flächen bei der Abtastung abgestellt. Die erste plane Erfassungsfläche ist hierbei seitlich an dem Erfassungsabschnitt als Wandfläche ausgebildet, die weitere, gekrümmte Erfassungsfläche ist vorzugsweise am stirnseitigen, also koronalen Ende des Erfassungshilfskörpers ausgebildet und weist somit sowohl Flächenanteile auf, die senkrecht in einer ersten Richtung zur ersten planen Erfassungsfläche liegen als auch senkrecht in einer zweiten Richtung zur ersten planen Erfassungsfläche liegen, wodurch eine einerseits eindeutige Referenzierung in theoretischer Hinsicht als auch eine ausreichend hohe Anzahl an Abtastpunkten und somit eine präzise Referenzierung in praktischer Hinsicht erreichbar wird. Die Erfindung beruht hierbei auf der Erkenntnis, dass zwar Kanten und Ecken eines Erfassungshilfskörpers im Zuge der Abtastung markante Punkte darstellen, die so bei der Abtastung erreichte Genauigkeit aber bei der späteren Triangulation oftmals verloren geht, da Kanten und Ecken bei der Triangulation stets in gewisser Weise angenähert werden müssen und nicht scharf abgebildet werden können. Dieser Nachteil tritt nicht auf, wenn Flächen, insbesondere plane oder leicht gekrümmte Flächen abgetastet und mit einer Triangulation umgesetzt werden, da solche Flächen auch bei einer Triangulation in hohem Maße kongruent zum tatsächlich abgetasteten Bild umgesetzt werden können. Der erfindungsgemäße Erfassungshilfskörper ermöglicht daher eine erheblich präzisere Bestimmung der Lage und des Ortes eines Implantats als Erfassungshilfskörper nach dem Stand der Technik.

Erfindungsgemäß ist der Aufnahmeabschnitt als nicht-zylindrische Fläche ausgebildet, insbesondere als Mehrkantfläche. Mit einem solcherart ausgebildeten Aufnahmeabschnitt kann der Erfassungshilfskörper rotationsgesichert, insbesondere in einer definierten Rotationswinkellage um die Mittellängsachse mit dem Implantat verbunden werden und ermöglicht daher in sicherer Weise eine reproduzierbare Verbindung zwischen dem Erfassungshilfskörper und dem Implantat. Insbesondere können hierbei solche nicht-zylindrischen Flächen ausgeführt werden, die nur in einer einzigen definierten Rotationswinkellage eine Zusammenfügung von Implantat und Erfassungshilfskörper erlauben, beispielsweise gleichschenklige Dreiecksquerschnitte, asymmetrische Trapezquerschnitte. In bestimmten Ausgestaltungen können aber auch andere Ausgestaltungen des Aufnahmeabschnitts, beispielsweise quadratische Vierkantabschnitte oder regelmäßige Sechskantabschnitte eingesetzt werden.

Noch weiter ist es bevorzugt, dass der Erfassungsabschnitt als zylindrischer Grundkörper ausgebildet ist, dessen Mittellängsachse der Erstreckungsrichtung des Erfassungsabschnitts entspricht und in dessen Außenfläche die erste plane Erfassungsfläche als sich im Querschnitt als Sekante darstellende Fläche ausgebildet ist und an deren stirnseitigem Ende die zweite Erfassungsfläche ausgebildet ist. Diese Ausgestaltung hat sich als einerseits besonders präzise in der Fertigung des Erfassungshilfskörpers erwiesen und ermöglicht andererseits eine schnelle und sichere Abtastung.

Weiterhin ist es bevorzugt, dass der Erfassungsabschnitt eine zweite plane Erfassungsfläche aufweist, deren Flächennormale senkrecht zur Erstreckungsrichtung des Erfassungsabschnitts liegt und die in Bezug auf einen Querschnitt senkrecht zur Erstreckungsrichtung des Erfassungsabschnitts in einem anderen Winkelbereich um die Erstreckungsachse des Erfassungsabschnitts als die erste plane Erfassungsfläche angeordnet ist. Durch eine solche zweite plane Erfassungsfläche kann die Genauigkeit der Abtastung weiter erhöht werden, da zwei plane Referenzflächen in einer zueinander bekannten Lage am erfindungsgemäßen Erfassungshilfskörper bereitgestellt und deren abgetastete Lage zueinander korreliert werden können.

Dabei ist es besonders bevorzugt, wenn die zweite plane Erfassungsfläche rotationssymmetrisch gegenüberliegend zur ersten planen Erfassungsfläche angeordnet ist. Bei dieser weiteren Fortbildung liegen die beiden planen Erfassungsflächen in einem Winkel von 180° zueinander. Diese Anordnung hat einen spezifischen Vorteil, der sich aus der typischerweise durch spanende Bearbeitung eines Drehkörpers erfolgenden Herstellung des Erfassungshilfskörpers ergibt. Da eine kritische Fertigungsgröße bei dieser Art der Herstellung die radiale Tiefe ist, in welcher die plane Erfassungsfläche durch einen Fräsvorgang gesetzt wird, kann durch Fräsung der beiden planen Erfassungsflächen mit ein und derselben Werkzeugeinstellung eine Fertigungstoleranz vollständig ausgeglichen werden, da eine Abweichung der radialen Anordnung der Fläche sich bei beiden Flächen in gleicher Weise auswirken würde und daher die Bestimmung der Mittellängsachse in unveränderter Präzision unter Bezugnahme auf die beiden gegenüberliegenden Erfassungsflächen erfolgen kann.

Erfindungsgemäß wird der erfindungsgemäße Erfassungshilfskörper fortgebildet durch einen sich durch den Erfassungsabschnitt und den Aufnahmeabschnitt erstreckenden Kanal zur Aufnahme einer Schraube zur Befestigung des Erfassungshilfskörpers an einem Implantat. Ein solcher Kanal, der mit einem Absatz, der als Widerlager für einen Schraubenkopf dient, ausgebildet ist, ermöglicht eine sichere Befestigung des Erfassungshilfskörpers an dem Implantat. Insbesondere kann in einem solchen Fall die gekrümmte Erfassungsfläche ringförmig um die koronale Öffnung des Kanals angeordnet sein.

Schließlich wird nach einer weiteren bevorzugten Ausführungsform der erfindungsgemäße Erfassungshilfskörper fortgebildet durch einen als Sechskantfläche ausgebildeten Aufnahmeabschnitt, an den sich nach koronal ein um eine Mittellängsachse rotationssymmetrischer, sich konisch erweiternder Abschnitt anschließt, an den sich nach koronal ein um die Mittellängsachse rotationssymmetrischer zylindrischer Abschnitt anschließt, in dem, beabstandet vom Übergang zwischen dem konischen und dem zylindrischen Abschnitt die erste und eine zweite plane Erfassungsfläche ausgebildet sind, die gegenüberliegend zueinander angeordnet sind und deren Flächennormale senkrecht zur Mittellängsachse liegt, wobei die erste und zweite Erfassungsfläche in ihrem nach apikal weisenden Endbereich in verrundeter Weise in den zylindrischen Abschnitt übergehen, und eine als ringförmiger Abschnitt am koronalen Ende ausgebildete gekrümmte Erfassungsfläche, die eine Öffnung zur Einführung einer Schraube zur Befestigung des Erfassungshilfskörpers an einem Implantat umringt und die als verrundete Übergangsfläche zwischen dem zylindrischen Abschnitt und dem koronalen Ende ausgebildet ist.

Diese Art des Aufbaus hat sich als einerseits besonders unempfindlich gegenüber Fertigungstoleranzen erwiesen, die bei der Herstellung des Erfassungshilfskörpers auftreten und ermöglicht andererseits eine gute Erfassung der für die Weiterverarbeitung relevanten Flächen und andererseits eine sichere rechnerische Weiterverarbeitung der so gewonnenen Daten.

Ein weiterer Aspekt der Erfindung ist ein Erfassungshilfskörper nach der vorhergehenden oder eingangs beschriebenen Bauweise, mit einem Zahnaufbauteil, das einen Schraubenaufnahmekanal aufweist, in dem eine Schraube zur Befestigung des Aufbauteils an einem Implantat angeordnet werden kann, welches dadurch fortgebildet ist, dass der Erfassungsabschnitt des Erfassungshilfskörpers eine Außenkontur aufweist, welche zumindest teilweise, vorzugsweise vollständig der Innengeometrie des Schraubenaufnahmekanals des Aufbauteils entspricht. Dieser Aspekt der Erfindung ermöglicht neben einer präzisen Bestimmung der Implantationslage und des Implantationsortes zugleich eine unmittelbar aus den Abtastdaten und den daraus rekonstruierten Abtastflächen erzielbare Darstellung der Lage der Bohrung eines Implantataufbaus. Für den Zahntechniker ist die Lage dieser Bohrung bei der Anfertigung des Zahnersatzes von erheblicher Bedeutung, da die Bohrung bei der individuellen Anpassung des Zahnersatzes möglichst allseitig mit ausreichender Wandstärke umgeben sein sollte, um die Festigkeit des Zahnersatzes zu gewährleisten. Der solcherart fortgebildete Erfassungshilfskörper des Implantatsystems ermöglicht gegenüber Vorgehensweisen, bei denen diese Bohrung indirekt hinsichtlich ihrer Lage und Ausrichtung berechnet werden muss, Vorteile in der Genauigkeit der Bestimmung der Lage, da Berechnungsschritte, die ansonsten erforderlich wären, entfallen können. Dem Zahntechniker wird daher in direkter Weise die für die weitere Bearbeitung des Zahnersatzes relevante Geometrie der Bohrung bereitgestellt.

Das erfindungsgemäße Zahnaufbauteil mit zugehörigem Erfassungshilfskörper kann dadurch fortgebildet werden, dass der Aufnahmeabschnitt als Außengewinde ausgebildet ist. Diese Ausgestaltung hat sich einerseits als besonders präzise bei der Fertigung des Erfassungshilfskörpers erwiesen, da dieser als rotationssymmetrisches Bauteil ausgeführt werden kann. Andererseits ist die durch ein Außengewinde in der Regel unbestimmt bleibende Winkellage um die Mittellängsachse bei der Befestigung am Implantat aufgrund der Ausgestaltung des Erfassungsabschnitts als vorzugsweise rotationssymmetrischer Schraubenaufnahmekanal für das erfindungsgemäße Implantatsystem keine Beeinträchtigung bei der Rekonstruktion der Implantatlage und des Implantatortes.

Noch weiter ist es bevorzugt, wenn zwischen Aufnahmeabschnitt und Erfassungsabschnitt ein nicht rotationssymmetrischer Verdrehsicherungsbereich angeordnet ist. Mit einem solchen Verdrehsicherungsbereich wird einerseits eine unverwechselbare Lagebestimmung des Erfassungshilfskörpers in Bezug auf die Winkelposition um die Mittellängsachse ermöglicht. Darüber hinaus kann an einem solchen Verdrehsicherungsbereich ein Zahnaufbauteil oder eine modellierte Krone in reproduzierbarer Weise bezüglich seiner Winkellage ausgerichtet werden, wodurch die Bearbeitung und das manuelle Ausprobieren vereinfacht werden kann. Der Verdrehsicherungsbereich kann zu diesem Zweck insbesondere in geometrisch übereinstimmender Weise zu einem entsprechenden Verdrehsicherungsbereich ausgebildet werden, der an einem entsprechenden Zahnaufbauteil ausgebildet ist.

Schließlich ist ein weiterer Aspekt der Erfindung ein Verfahren nach Anspruch 8.

Mit dem solcherart ausgebildeten Verfahren wird ein verbessertes Vorgehen bei der Erfassung der Lage und des Ortes eines Zahnimplantats bereitgestellt, welches insbesondere auf eine erste plane Erfassungsfläche und eine gekrümmte Erfassungsfläche zurückgreift, die abgetastet werden, beispielsweise mittels eines Streifenlichtscanners. Die erste, plane Erfassungsfläche und die gekrümmte Erfassungsfläche sind vorzugsweise voneinander beabstandet. Dies schließt nicht aus, dass die beiden Erfassungsflächen aneinander angrenzen, maßgeblich für die Genauigkeit der Erfassung ist vielmehr, dass beide Erfassungsflächen Flächenanteile aufweisen, die weder kongruent noch direkt aneinander angrenzend sind. Durch Abtasten der planen und der gekrümmten Erfassungsfläche werden Bilddaten erfasst und für die Weiterverarbeitung bereitgestellt, die mit einer besonders geringen Fehlerquote einem Triangulationsverfahren oder einem anderen Verfahren zur Erstellung von einer segmentierten dreidimensionalen Flächendarstellung oder Volumendarstellung zeigen. Hierdurch kann der gesamte Prozess einer Erfassung und rechnerischen Rekonstruktion der Lage und des Ortes eines Implantats auf Basis von an einem Erfassungshilfskörper erfassten geometrischen Daten hinsichtlich seiner Präzision und Fehlersicherheit erheblich verbessert werden.

Das Verfahren kann dadurch weitergebildet werden, dass als gekrümmte Erfassungsfläche eine ringförmig am koronalen Ende des Erfassungshilfskörpers ausgebildete verrundete Fläche abgetastet wird. Die Abtastung einer solcherart angeordneten gekrümmten Erfassungsfläche hat sich als besonders vorteilhaft für die Erzielung einer hohen Genauigkeit erwiesen, da diese Erfassungsfläche aufgrund ihrer Lage einen geringen Winkelfehler bezüglich der Winkelausrichtung des Implantats erzeugt, sofern im Abtastvorgang oder im späteren Umrechnungsvorgang Toleranzen auftreten. Darüber hinaus ist die solcherart angeordnete und ausgebildete gekrümmte Erfassungsfläche in besonders präziser Weise am Erfassungshilfskörper in spanender Bearbeitung zu fertigen. Die gekrümmte Erfassungsfläche stellt in diesem Fall eine Art einer verrundeten Fase dar, die idealerweise sich über einen Verrundungsbereich von 90° erstreckt.

Noch weiter ist es bevorzugt, dass ein Bereich einer zweiten, planen Erfassungsfläche abgetastet wird, die gegenüberliegend zur ersten Erfassungsfläche angeordnet ist und deren Flächennormale vorzugsweise senkrecht zur Mittellängsachse liegt. Durch die Erfassung einer solchen zweiten, planen Erfassungsfläche wird die Genauigkeit des Erfassungs- und Rekonstruktionsvorgangs weiter erhöht. Insbesondere kann dann, wenn die zweite, plane Erfassungsfläche gegenüberliegend zur ersten, planen Erfassungsfläche liegt, also die beiden planen Erfassungsflächen parallel zueinander angeordnet sind, ein etwaiger Fertigungsfehler, der sich in einer im Rahmen der Toleranz abweichenden radialen Tiefenanordnung der beiden planen Erfassungsflächen in symmetrischer Weise ausdrückt, keinen Einfluss auf die exakte Bestimmung der Mittellängsachse des Erfassungshilfskörpers nehmen.

Noch weiter ist es bevorzugt, wenn ein Bereich der ersten, und gegebenenfalls der zweiten planen Erfassungsfläche abgetastet wird, der allseitig zu den Umrisskanten der ersten bzw. zweiten planen Erfassungsfläche einen vorbestimmten Abstand aufweist. Durch die Wahl eines solchen zur Abtastung verwendeten Bereichs der Erfassungsfläche(n) wird ein Ungenauigkeitseffekt vermieden, der daraus resultiert, dass häufig im Bereich von stumpfen oder spitzen Kanten eines Erfassungshilfskörpers Abweichungen bei der Erstellung eines Flächen- oder Volumenmodells mittels Triangulation oder anderer Segmentierungsmethoden auftreten, die insbesondere darin begründet liegen, dass die Abbildung von Kanten mit den geläufigen Umsetzungsverfahren zur Erstellung von Volumen- oder Flächenmodellen aus Abtastdaten nicht mit ausreichender Genauigkeit erfolgt. Das fortgebildete Verfahren vermeidet diese Ungenauigkeiten, indem von solchen Kanten ein Abstand eingehalten wird, der ausreichend ist, dass innerhalb dieses Abstandsbereichs zumindest ein, vorzugsweise zwei oder mehrere Knotenpunkte bei der nachfolgenden Berechnung des Volumen- bzw. Flächenmodells zu liegen kommen. Hierdurch wird gewährleistet, dass der abgetastete Bereich in der nachfolgenden Berechnung als ebener Bereich in das Volumen- bzw. Flächenmodell umgesetzt werden kann, wodurch die Berechnung der Implantatlage und des Implantatortes auf Basis von den tatsächlichen Geometrien entsprechend umgesetzten Abtastdaten erfolgen kann.

Schließlich ist es weiter bevorzugt, wenn das Verfahren der eingangs erwähnten Art oder der zuvor erläuterten Fortbildungen weiter dadurch fortgebildet wird, dass eine Erfassungsfläche abgetastet wird, deren Außengeometrie teilweise, vorzugsweise vollständig der Innengeometrie einer Bohrung eines Aufbauteils entspricht, durch welche eine Schraube zur Befestigung des Aufbauteils an einem Implantat geführt ist. Durch das Abtasten einer solcherart ausgebildeten Erfassungsfläche wird bereits beim Abtastvorgang eine Flächengeometrie erfasst, die für die weitere Bearbeitung des Zahnimplantats von Bedeutung ist, da zu der solcherart hinsichtlich Lage und Ort erfassten Innenbohrung allseitig eine Materialstärke vorhanden sein muss, die eine ausreichende Festigkeit des Implantats gewährleistet. Die Abtastung der der Innengeometrie der Bohrung entsprechenden Außenfläche ermöglicht somit ohne dass geometrische Daten eines Zahnaufbauteils und dessen Befestigung am Implantat in die Berechnung einfließen müssten, eine direkte Darstellung dieser relevanten Bohrungsgeometrie. Durch die Vermeidung der Rechenzwischenschritte, welche ansonsten erforderlich wären, kann die Genauigkeit somit erhöht werden.

Eine bevorzugte Ausführungsform der Erfindung wird anhand der beiliegenden Figuren erläutert. Es zeigen:
Fig. 1 eine perspektivische Ansicht einer ersten Ausführungsform eines erfindungsgemäßen Erfassungshilfskörpers,
Fig. 2 eine Frontalansicht des Erfassungshilfskörpers nach Fig. 1,
Fig. 3 eine Seitenansicht des Erfassungshilfskörpers nach Fig. 1,
Fig. 4 eine geschnittene Frontalansicht des Erfassungshilfskörpers gemäß Fig. 1,
Fig. 5 eine Ansicht von apikal auf den Erfassungshilfskörper nach Fig. 1, und
Fig. 6 eine Ansicht von koronal auf den Erfassungshilfskörper nach Fig. 1.

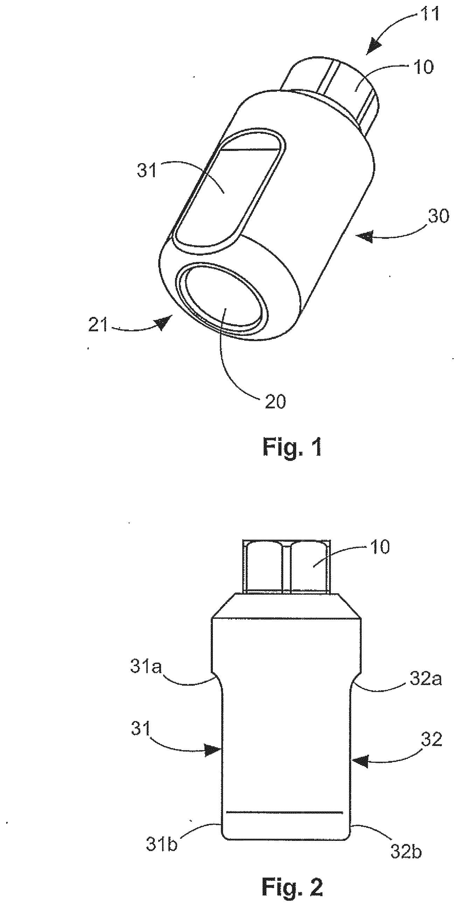

Die Figuren 1 bis 6 zeigen einen Erfassungshilfskörper, oder auch und im Folgenden der Verkürzung halber Scankörper, welcher an einem apikalen Ende 11 einen als Sechskant ausgebildeten Aufnahmeabschnitt 10 aufweist. An dem diesem apikalen Ende gegenüberliegenden koronalen Ende 21 ist eine kreisförmige Öffnung einer zylindrischen Bohrung 20 ausgebildet, die als Aufnahmekanal für eine Schraube dient. Durch diesen Aufnahmekanal kann eine Schraube hindurchgeführt und mit ihrem Schraubenkopf an einem Absatz 22 abgestützt werden, um den Scankörper mit einem Implantat zu verbinden. Der Sechskantabschnitt 10 dient hierbei zur Rotationssicherung und zur Definition der Winkellage des Scankörpers gegenüber dem Implantat um die Längsmittelachse 100 des Scankörpers.

Der Scankörper weist weiterhin einen Erfassungsabschnitt 30 auf, der im Wesentlichen als zylindrischer Grundkörper ausgebildet ist. Der Erfassungsabschnitt weist zwei plane Erfassungsflächen 31, 32 auf, die als gefräste Flächen in die Außenfläche des zylindrischen Grundkörpers eingebracht sind. Die beiden planen Erfassungsflächen 31, 32 sind gegenüberliegend zueinander angeordnet und liegen parallel zueinander.

Der Scankörper weist weiterhin eine gekrümmte Erfassungsfläche 40 auf, die als ringförmige Endfläche am koronalen Ende des Scankörpers angeordnet ist und die koronalseitige Öffnung der Bohrung 20 umgibt.

Zwischen dem Sechskant 10 und dem zylindrischen Grundkörper des Erfassungsabschnitts ist eine sich konisch von apikal nach koronal erweiternde Konusfläche 50 angeordnet, die als Anschlagfläche für den Scankörper in das Implantat dient. Nach koronal anschließend an diese Konusfläche 50 ist ein rotationssymmetrischer zylindrischer Abschnitt 33 angeordnet. Nach koronal an diesem zylindrischen Abschnitt 33 sind die beiden planen Erfassungsflächen 31, 32 mit einem verrundeten Übergang 31a, 32a an dem zylindrischen Grundkörper ausgebildet und laufen plan in die gekrümmte Erfassungsfläche mit Flächenabschnitten 31b, 32b aus.

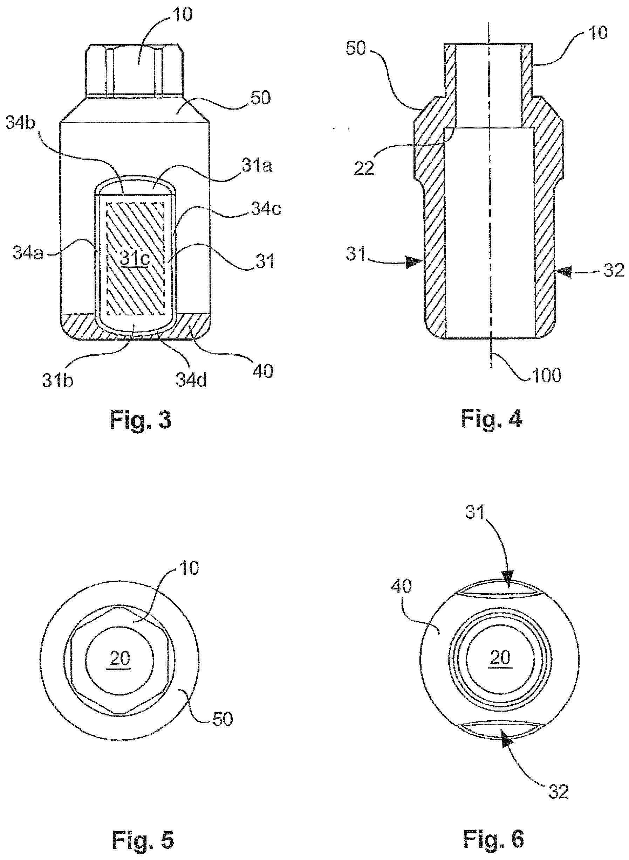

Wie im Detail in Fig. 3 zu erkennen ist, werden lediglich bestimmte Bereiche der ersten und zweiten planen Erfassungsfläche 31, 32 mit dem Abtastverfahren abgetastet, die durch eine unterbrochene Linie umrissen und durch eine Schraffur von links oben nach rechts unten dargestellt sind. Der solcherart definierte Abtastbereich 31c weist einen allseitigen Abstand von den Rändern bzw. Kanten 34a-d auf, der gewährleistet, dass Abtast- oder Umsetzungsfehler, die im Bereich solcher Kanten auftreten, das Abtastergebnis und die nachfolgende Berechnung der Lage des Scankörpers nicht beeinträchtigen.

Bei Verwendung des Zahnaufbauteils der ersten Ausführungsform wird anhand der im Triangulationsverfahren definierten abgetasteten Flächenbereiche der Erfassungsflächen 31, 32 und 40 die genaue Lage des Scankörpers im Mundraum ermittelt und aus dieser genauen Lage kann dann aufgrund der bekannten Geometrie des Scankörpers auf die exakte Lage, Ausrichtung und den Implantationsort des Implantats geschlossen werden. Aufgrund dieser solcherart berechneten Lage kann dann wiederum bei bekannter Geometrie eines Zahnaufbauteils und dessen Anschlussschnittstelle zum Implantat die Lage des Zahnaufbauteils berechnet und in eine entsprechende dreidimensionale Bilddarstellung virtuell eingeblendet werden, um die Überprüfung der Lage zu erlauben.

## Patentansprüche

1. Erfassungshilfskörper für die digitale geometrische Erfassung der Implantationslage und des Implantationsortes eines Zahnimplantats, umfassend:
- einen Aufnahmeabschnitt (10), mittels dem der Erfassungskörper einem Zahnimplantat in geometrisch definierter Weise zugeordnet werden kann,
- einen mit dem Aufnahmeabschnitt verbundenen Erfassungsabschnitt (30), welcher ausgebildet ist, um von einer berührungslosen Bilderfassungsvorrichtung erfasst zu werden,
wobei der Erfassungsabschnitt sich ausgehend vom Aufnahmeabschnitt in einer Erstreckungsrichtung (100) erstreckt, eine erste plane Erfassungsfläche (31) aufweist, deren Flächennormale senkrecht zur Erstreckungsrichtung des Erfassungsabschnitts liegt, und eine gekrümmte Erfassungsfläche (40) aufweist, und
wobei der Erfassungsabschnitt (30) als zylindrischer Grundkörper ausgebildet ist, dessen Mittellängsachse (100) der Erstreckungsrichtung des Erfassungsabschnitts entspricht und in dessen Außenfläche die erste plane Erfassungsfläche (31) als sich im Querschnitt als Sekante darstellende Fläche ausgebildet und an deren stirnseitigem Ende eine zweite Erfassungsfläche ausgebildet ist, und
**gekennzeichnet durch** einen sich durch den Erfassungsabschnitt und den Aufnahmeabschnitt erstreckenden Kanal (20) zur Aufnahme einer Schraube zur Befestigung des Erfassungshilfskörpers an einem Implantat,
wobei der Kanal mit einem als Widerlager für einen Schraubenkopf dienenden Absatz ausgebildet ist,
weiter **dadurch gekennzeichnet, dass** der Aufnahmeabschnitt (10) als nicht-zylindrische Fläche ausgebildet ist und zwischen einer Mehrkantfläche des Aufnahmeabschnitts und dem zylindrischen Grundkörper eine sich konisch von apikal nach koronal erweiternde Konusfläche (50) angeordnet ist, die als Anschlagfläche für den Erfassungshilfskörper in das Zahnimplantat dient.

2. Erfassungshilfskörper nach einem der vorhergehenden Ansprüche,
**dadurch gekennzeichnet, dass** der Erfassungsabschnitt eine zweite plane Erfassungsfläche (32) aufweist, deren Flächennormale senkrecht zur Erstreckungsrichtung des Erfassungsabschnitts liegt und die in Bezug auf einen Querschnitt senkrecht zur Erstreckungsrichtung des Erfassungsabschnitts in einem anderen Winkelbereich um die Erstreckungsachse des Erfassungsabschnitts als die erste plane Erfassungsfläche angeordnet ist, wobei vorzugsweise die zweite plane Erfassungsfläche (32) rotationssymmetrisch gegenüberliegend zur ersten planen Erfassungsfläche (31) angeordnet ist.

3. Erfassungshilfskörper nach einem der vorhergehenden Ansprüche,
**dadurch gekennzeichnet, dass** die gekrümmte Erfassungsfläche stirnseitig angeordnet ist.

4. Erfassungshilfskörper nach einem der vorhergehenden Ansprüche,
**gekennzeichnet durch**
- einen als Sechskantfläche (10) ausgebildeteten Aufnahmeabschnitt,
- an den sich nach koronal ein um eine Mittellängsachse (100) rotationssymmetrischer, sich konisch erweiternder Abschnitt anschließt,
- an den sich nach koronal ein um die Mittellängsachse rotationssymmetrischer zylindrischer Abschnitt anschließt,
∘ in dem, beabstandet vom Übergang zwischen dem konischen und dem zylindrischen Abschnitt die erste (31) und eine zweite (32) plane Erfassungsfläche ausgebildet sind,
∘ die gegenüberliegend und parallel zueinander angeordnet sind und
∘ deren Flächennormale senkrecht zur Mittellängsachse liegt,
∘ wobei die erste und zweite Erfassungsfläche in ihrem nach apikal weisenden Endbereich in verrundeter Weise in den zylindrischen Abschnitt übergehen,
- und eine als ringförmiger Abschnitt am koronalen Ende ausgebildete gekrümmte Erfassungsfläche (40), die eine Öffnung zur Einführung einer Schraube zur Befestigung des Erfassungshilfskörper an einem Implantat umringt und die als verrundete Übergangsfläche zwischen dem zylindrischen Abschnitt und dem koronalen Ende ausgebildet ist.

5. Erfassungshilfskörper nach einem der vorhergehenden Ansprüche mit einem Zahnaufbauteil, das einen Schraubenaufnahmekanal aufweist, in dem eine Schraube zur Befestigung des Aufbauteils an einem Implantat angeordnet werden kann,
**dadurch gekennzeichnet, dass** der Erfassungsabschnitt des Erfassungshilfskörpers eine Außenkontur aufweist, welche zumindest teilweise, vorzugsweise vollständig der Innengeometrie des Schraubenaufnahmekanal des Zahnaufbauteils entspricht.

6. Erfassungshilfskörper mit Zahnaufbauteil nach Anspruch 5,
**dadurch gekennzeichnet, dass** der Aufnahmeabschnitt als Außengewinde ausgebildet ist.

7. Erfassungshilfskörper mit Zahnaufbauteil nach Anspruch 5 oder 6,
**dadurch gekennzeichnet, dass** zwischen Aufnahmeabschnitt und Erfassungsabschnitt ein nicht rotationssymmetrischer Verdrehsicherungsbereich angeordnet ist.

8. Verfahren zur Erfassung der Lage und des Ortes eines Zahnimplantats, mit den Schritten:
- Befestigen eines Erfassungshilfskörpers in definierter Lage an dem Zahnimplantat mittels einer Schraube, die sich durch einen Kanal (20) erstreckt, der sich durch den Erfassungsabschnitt und den Aufnahmeabschnitt erstreckt,
- Erfassen der Lage und des Ortes des Erfassungshilfskörpers mit einem Abtastverfahren, insbesondere einem Spaltlichtabtastverfahren,
**dadurch gekennzeichnet, dass** die Lage und der Ort des Erfassungshilfskörpers erfasst wird, indem ein Bereich einer ersten, planen Erfassungsfläche, die als sich im Querschnitt als Sekante darstellende Außenfläche des als zylindrischer Grundkörper ausgebildeten Erfassungsabschnitts (30) ist, dessen Mittellängsachse (100) der Erstreckungsrichtung des Erfassungsabschnitts entspricht und an deren stirnseitigem Ende eine zweite Erfassungsfläche ausgebildet ist, und ein Bereich einer gekrümmten Erfassungsfläche abgetastet wird, deren Flächennormale vorzugsweise senkrecht zur Mittellängsachse des Erfassungshilfskörpers liegt,
und dass der Aufnahmeabschnitt (10) als nicht-zylindrische Fläche ausgebildet ist und bei dem Befestigen des Erfassungshilfskörpers an dem Zahnimplantat eine zwischen einer Mehrkantfläche des Aufnahmeabschnitts und dem zylindrischen Grundkörper angeordnete, sich konisch von apikal nach koronal erweiternde Konusfläche (50) als Anschlagfläche für den Erfassungshilfskörper in das Zahnimplantat dient.

9. Verfahren nach Anspruch 8,
**dadurch gekennzeichnet, dass** als gekrümmte Erfassungsfläche eine ringförmig am koronalen Ende des Erfassungshilfskörpers ausgebildete verrundete Fläche abgetastet wird.

10. Verfahren nach einem der vorhergehenden Ansprüche 8-9,
**dadurch gekennzeichnet, dass** ein Bereich der ersten, und gegebenfalls der zweiten planen Erfassungsfläche abgetastet wird, der allseitig zu den Umrisskanten der ersten bzw. zweiten planen Erfassungsfläche einen vorbestimmten Abstand aufweist.

11. Verfahren nach einem der vorhergehenden Ansprüche 8-10,
**dadurch gekennzeichnet, dass** eine Erfassungsfläche abgetastet wird, deren Außengeometrie teilweise, vorzugsweise vollständig der Innengeometrie einer Bohrung eines Aufbauteils entspricht, durch welche eine Schraube zur Befestigung des Aufbauteils an einem Implantat geführt ist.

## Claims

1. Detection body for the digital geometric detection of the implantation position and the implantation site of a dental implant, comprising:
- a mounting section (10) by means of which the detection body can be assigned to a dental implant in a geometrically defined manner,
- a detection section (30) connected to the mounting section, which is designed to be detected by a contactless image detection device,
wherein the detection section extends from the mounting section in an extension direction (100), has a first flat detection surface (31) whose surface normal is perpendicular to the extension direction of the detection section, and has a curved detection surface (40), and
wherein the detection section (30) is designed as a cylindrical base body whose central longitudinal axis (100) corresponds to the extension direction of the detection section and in whose outer surface the first flat detection surface (31) is designed as a surface with a secant cross-section and at whose front end a second detection surface is designed, and
**characterized by** a channel (20) extending through the detection section and the mounting section for receiving a screw for fastening the detection body to an implant, wherein the channel is formed with a shoulder serving as an abutment for a screw head,
further **characterized in that** the mounting section (10) is designed as a non-cylindrical surface and a conical surface (50) extending conically from apical to coronal is arranged between a polygonal surface of the mounting section and the cylindrical base body, which serves as a stop surface for the detetction body in the dental implant.

2. Detection body according to one of the preceding claims,
**characterized in that** the detection section has a second flat detection surface (32) whose surface normal is perpendicular to the direction of extension of the detection section and which, in relation to a cross-section perpendicular to the extension direction of the detection section, is arranged in a different angular range around the axis of extension of the detection section than the first flat detection surface, wherein the second flat detection surface (32) is preferably arranged rotationally symmetrically opposite to the first flat detection surface (31).

3. Detection body according to one of the preceding claims,
**characterized in that** the curved detection surface is arranged at the front end.

4. Detection body according to one of the preceding claims,
**characterized by**
- a mounting section designed as a hexagonal surface (10),
- which is connected coronally to a section that is rotationally symmetrical about a central longitudinal axis (100) and tapers conically,
- which is followed coronally by a cylindrical section that is rotationally symmetrical about the central longitudinal axis,
∘ in which, spaced apart from the transition between the conical and the cylindrical section, the first (31) and a second (32) flat detection surface are formed,
∘ which are arranged opposite and parallel to each other and
∘ whose surface normals are perpendicular to the central longitudinal axis,
∘ wherein the first and second detection surfaces merge into the cylindrical section in a rounded manner at their apically pointing end region,
- and a curved detection surface (40) formed as an annular section at the coronal end, which surrounds an opening for inserting a screw for fastening the detection body to an implant and which is formed as a rounded transition surface between the cylindrical section and the coronal end.

5. Detection body according to one of the preceding claims, with a tooth superstructure having a screw receiving channel in which a screw for fastening the superstructure to an implant can be arranged,
**characterized in that** the detection section of the detection body has an outer contour which at least partially, preferably completely, corresponds to the internal geometry of the screw receiving channel of the tooth superstructure.

6. Detection body with a dental superstructure according to claim 5,
**characterized in that** the mounting section is designed as an external thread.

7. Detection body with dental superstructure according to claim 5 or 6,
**characterized in that** a non-rotationally symmetrical anti-rotation section is arranged between the mounting section and the detection section.

8. Method for detecting the position and location of a dental implant, comprising the steps of:
- fastening a detection body in a defined position on the dental implant by means of a screw extending through a channel (20) extending through the detection section and the mounting section,
- detecting the position and location of the detection body using a scanning method, in particular a gap light scanning method,
**characterized in that** the position and location of the detection body is detected by scanning a region of a first, flat detection surface, which is the outer surface of the detection section (30) designed as a cylindrical base body, which is secant in cross-section, whose central longitudinal axis (100) corresponds to the extension direction of the detection section and at the front end of which a second detection surface is formed, and a region of a curved detection surface is scanned, the surface normal of which is preferably perpendicular to the central longitudinal axis of the detection body,
and that the mounting section (10) is formed as a non-cylindrical surface and, when the detection body is attached to the dental implant, a conical surface (50) arranged between a polygonal surface of the mounting section and the cylindrical base body, which widens conically from apical to coronal, serves as a stop surface for the detection body in the dental implant.

9. Method according to claim 8,
**characterized in that** a rounded surface formed annularly at the coronal end of the detection body is scanned as a curved detection surface.

10. Method according to one of the preceding claims 8-9,
**characterized in that** a region of the first and, if applicable, the second flat detection surface is scanned which has a predetermined distance on all sides from the outline edges of the first or second flat detection surface.

11. Method according to one of the preceding claims 8-10,
**characterized in that** a detection surface is scanned whose outer geometry corresponds partially, preferably completely, to the inner geometry of a borehole in a superstructure part through which a screw for fastening the superstructure part to an implant is guided.

## Revendications

1. Corps auxiliaire de détection pour la détection géométrique numérique de la position d'implantation et du lieu d'implantation d'un implant dentaire, comprenant :
- une section de réception (10), au moyen de laquelle le corps de détection peut être affecté à un implant dentaire de manière géométriquement définie,
- une section de détection (30) reliée à la section de réception, laquelle est réalisée pour être détectée par un dispositif de détection d'image sans contact,
dans lequel la section de détection s'étend à partir de la section de réception dans une direction d'extension (100), présente une première surface de détection plane (31), dont la normale à la surface se trouve perpendiculairement à la direction d'extension de la section de détection et présente une surface de détection incurvée (40), et
dans lequel la section de détection (30) est réalisée en tant que corps de base cylindrique, dont l'axe longitudinal médian (100) correspond à la direction d'extension de la section de détection et dans laquelle surface extérieure, la première surface de détection plane (31) est réalisée en tant que surface représentant une sécante dans la section transversale et au niveau de laquelle extrémité côté frontal, une deuxième surface de détection est réalisée, et
**caractérisé par** un canal (20) s'étendant à travers la section de détection et la section de réception pour la réception d'une vis pour la fixation du corps auxiliaire de détection au niveau d'un implant,
dans lequel le canal est réalisé avec un épaulement servant de contre-appui pour une tête de vis,
**caractérisé en outre en ce que** la section de réception (10) est réalisée en tant que surface non cylindrique et une surface conique (50) s'élargissant de manière conique de la partie apicale à la partie coronaire, qui sert de surface de butée pour le corps auxiliaire de détection dans l'implant dentaire, est agencée entre une surface polygonale de la section de réception et le corps de base cylindrique.

2. Corps auxiliaire de détection selon l'une quelconque des revendications précédentes, **caractérisé en ce que** la section de détection présente une deuxième surface de détection plane (32), dont la normale à la surface se trouve perpendiculairement à la direction d'extension de la section de détection et qui est agencée par rapport à une section transversale perpendiculairement à la direction d'extension de la section de détection dans une autre plage angulaire autour de l'axe d'extension de la section de détection que la première surface de détection plane, dans lequel de préférence la deuxième surface de détection plane (32) est agencée en symétrie de rotation à l'opposé de la première surface de détection plane (31).

3. Corps auxiliaire de détection selon l'une quelconque des revendications précédentes, **caractérisé en ce que** la surface de détection incurvée est agencée côté frontal.

4. Corps auxiliaire de détection selon l'une quelconque des revendications précédentes, **caractérisé par**
- une section de réception réalisée en tant que surface hexagonale (10),
- à laquelle se raccorde coronairement une section s'élargissant de manière conique, à symétrie de rotation autour d'un axe longitudinal médian (100),
- à laquelle se raccorde coronairement une section cylindrique à symétrie de rotation autour de l'axe longitudinal médian,
∘ dans laquelle, à distance de la transition entre la section conique et la section cylindrique, la première (31) et une deuxième (32) surface de détection plane sont réalisées,
∘ qui sont agencées à l'opposé et parallèlement l'une à l'autre et
∘ dont la normale à la surface se trouve perpendiculairement à l'axe longitudinal médian,
∘ dans lequel la première et deuxième surface de détection passent dans leur zone d'extrémité dirigée apicalement de manière arrondie dans la section cylindrique,
- et une surface de détection incurvée (40) réalisée au niveau de l'extrémité coronaire en tant que section annulaire, qui entoure une ouverture pour l'introduction d'une vis pour la fixation du corps auxiliaire de détection au niveau d'un implant et qui est réalisée en tant que surface de transition arrondie entre la section cylindrique et l'extrémité coronaire.

5. Corps auxiliaire de détection selon l'une quelconque des revendications précédentes avec une pièce rapportée de dent, qui présente un canal de réception de vis, dans lequel une vis peut être agencée pour la fixation de la pièce rapportée au niveau d'un implant,
**caractérisé en ce que** la section de détection du corps auxiliaire de détection présente un contour extérieur, lequel correspond au moins en partie, de préférence complètement, à la géométrie intérieure du canal de réception de vis de la pièce rapportée de dent.

6. Corps auxiliaire de détection avec pièce rapportée de dent selon la revendication 5, **caractérisé en ce que** la section de réception est réalisée en tant que filet extérieur.

7. Corps auxiliaire de détection avec pièce rapportée de dent selon la revendication 5 ou 6, **caractérisé en ce qu'**une zone anti-rotation sans symétrie de rotation est agencée entre la section de réception et la section de détection.

8. Procédé de détection de la position et du lieu d'un implant dentaire, avec les étapes de :
- fixation d'un corps auxiliaire de détection dans une position définie au niveau de l'implant dentaire au moyen d'une vis, qui s'étend à travers un canal (20), qui s'étend à travers la section de détection et la section de réception,
- détection de la position et du lieu du corps auxiliaire de détection avec un procédé de balayage, en particulier un procédé de balayage par lumière interstitielle,
**caractérisé en ce que** la position et le lieu du corps auxiliaire de détection sont détectés, par le fait qu'une zone d'une première surface de détection plane, qui est en tant que surface extérieure, représentant une sécante dans la section transversale, de la section de détection (30) réalisée en tant que corps de base cylindrique, dont l'axe longitudinal médian (100) correspond à la direction d'extension de la section de détection et au niveau de laquelle extrémité côté frontal, une deuxième surface de détection est réalisée, et une zone d'une surface de détection incurvée est balayée, dont la normale à la surface se trouve de préférence perpendiculairement à l'axe longitudinal médian du corps auxiliaire de détection,
et **en ce que** la section de réception (10) est réalisée en tant que surface non cylindrique et lors de la fixation du corps auxiliaire de détection au niveau de l'implant dentaire, une surface conique (50) s'élargissant de manière conique de la partie apicale à la partie coronaire, agencée entre une surface polygonale de la section de réception et le corps de base cylindrique, sert de surface de butée pour le corps auxiliaire de détection dans l'implant dentaire.

9. Procédé selon la revendication 8,
**caractérisé en ce qu'**une surface arrondie réalisée de manière annulaire au niveau de l'extrémité coronaire du corps auxiliaire de détection est balayée en tant que surface de détection incurvée.

10. Procédé selon l'une quelconque des revendications précédentes 8-9,
**caractérisé en ce qu'**une zone de la première, et le cas échéant de la deuxième surface de détection plane est balayée, qui présente de tous les côtés par rapport aux arêtes de pourtour de la première ou deuxième surface de détection plane une distance prédéterminée.

11. Procédé selon l'une quelconque des revendications précédentes 8-10,
**caractérisé en ce qu'**une surface de détection est balayée, dont la géométrie extérieure correspond en partie, de préférence complètement à la géométrie intérieure d'un perçage d'une pièce rapportée, à travers lequel une vis est guidée pour la fixation de la pièce rapportée au niveau d'un implant.
